# EUROPEAN PATENT APPLICATION

(11) **EP 4 822 603 A1**
(43) Date of publication of application: **14.10.2026**
(21) Application number: 26167493.1
(22) Date of filing: 25.03.2026
(51) Int. Cl.: G06N 3/063

(54) **DISAGGREGATED INFERENCE SYSTEM FOR LARGE LANGUAGE MODEL**

(30) Priority: 09.04.2025 US 202563785890 P; 05.11.2025 KR 20250165575
(71) Applicant: SK hynix Inc., Bubal-eub Icheon-si, Gyeonggi-do 17336 (KR)
(72) Inventor: CHOI, Hae Rang, 17336 Icheon-si, Gyeonggi-do (KR); LIM, Eui Cheol, 17336 Icheon-si, Gyeonggi-do (KR)
(74) Representative: Isarpatent

(57) **Abstract**

A disaggregated inference system includes at least one first processing unit having a compute-bound characteristic and a plurality of second processing units having a memory-bound characteristic. The at least one first processing unit is configured to perform a prompt phase of a language-model inference process, and the plurality of second processing units are configured to perform a response phase of the language-model inference process.

## Description

### BACKGROUND

### 1. Technical Field

Various embodiments of the present disclosure generally relate to a language model inference system, and more particularly, to a disaggregated inference system for a large language model.

### 2. Related Art

In recent years, an inference process of a large language model (LLM) can be divided into two primary stages: a prompt phase that processes input data and a response phase that generates output data. From a structural perspective of an accelerator, the prompt phase is characterized by a large number of matrix-matrix multiplication operations. In general, matrix-matrix multiplication requires a significantly greater amount of computation relative to data movement and therefore exhibits a compute-bound characteristic in which performance is limited by computational throughput. Such an operation is known to be suitable for a Graphics Processing Unit (GPU) architecture.

In contrast, the response phase predominantly consists of matrix-vector multiplication operations. Matrix-vector multiplication has nearly equal data movement and computation requirements, and performance is limited by data transfer latency rather than computational throughput. Accordingly, the response phase exhibits a memory-bound characteristic in which performance is determined by memory bandwidth. Such an operation is suitable for a Processing-In-Memory (PIM) architecture.

Accordingly, conventional inference systems suffer from inefficiencies in at least a response phase of a large language model inference process, in which performance is limited by memory bandwidth when executed on a compute-oriented accelerator. Therefore, the present disclosure addresses a technical problem of improving overall inference efficiency by structurally separating a prompt phase and a response phase of a language model inference process and executing the prompt phase and the response phase on different types of processing units optimized for respective computational characteristics.

### SUMMARY

The present disclosure provides a disaggregated inference system in which a prompt phase and a response phase of a language model inference process are structurally separated and executed by different processing units optimized for compute-bound and memory-bound characteristics, respectively.

In one embodiment, the disaggregated inference system includes at least one first processing unit having a compute-bound characteristic and a plurality of second processing units having a memory-bound characteristic. The first processing unit is configured to perform a prompt phase of a language model inference process, and the plurality of second processing units are configured to perform a response phase of the language model inference process.

In other embodiment, the disaggregated inference system includes a first processing unit configured to receive a natural-language input string, convert the natural-language input string into a token sequence, embed the token sequence, and perform matrix-matrix multiplication to generate a first output token, and a plurality of second processing units configured to sequentially generate subsequent output tokens by each of the plurality of second processing units performing matrix-vector multiplication on an output token received from an immediately preceding processing unit and a key/value cache.

In another embodiment, the disaggregated inference system is implemented on a server basis and includes a plurality of first processing-unit servers having a compute-bound characteristic and a plurality of second processing-unit servers having a memory-bound characteristic. The plurality of first processing-unit servers are connected to the plurality of second processing-unit servers through a network. The plurality of first processing-unit servers are configured to perform a prompt phase of a language model inference process, and the plurality of second processing-unit servers are configured to perform a response phase of the language model inference process.

In another embodiment, the disaggregated inference system is implemented on a card basis and includes a plurality of first processing-unit cards having a compute-bound characteristic and a plurality of second processing-unit cards having a memory-bound characteristic. The plurality of first processing-unit cards are connected to the plurality of second processing-unit cards through a network bus. The plurality of first processing-unit cards are configured to perform a prompt phase of a language model inference process, and the plurality of second processing-unit cards are configured to perform a response phase of the language model inference process.

### BRIEF DESCRIPTION OF THE DRAWINGS

FIG. 1 is a block diagram illustrating a disaggregated inference system.
FIG. 2 illustrates operations performed by the first processing unit during the prompt phase of the language-model inference process.
FIG. 3 illustrates operations performed by each of the plurality of second processing units during the response phase, in which output tokens are sequentially generated by matrix-vector multiplication using a key/value cache.
FIG. 4 is a block diagram illustrating a server-based embodiment of the disaggregated inference system of FIG. 1.
FIG. 5 is a diagram provided to explain an example of an operation of the disaggregated inference system of FIG. 4.
FIG. 6 is a block diagram illustrating a card-based embodiment of the disaggregated inference system of FIG. 1.

### DETAILED DESCRIPTION

Terms such as "first" and "second" are used to distinguish between various elements and do not imply size, order, priority, quantity, or importance of the elements. For example, a first element may be referred to as a second element in one example, and the second element may be referred to as a first element in another example.

When an element is referred to as "connected" or "coupled" to another element, the elements may be connected directly or through one or more intervening elements between the elements. When two elements are referred to as "directly connected" or "directly coupled," one element is directly connected or directly coupled to the other element without an intervening element between the two elements.

Terms such as "over," "on," "inside," "higher," "high," "low," "left," "right," "column," "row," "level," and other terms implying relative spatial relationship or orientation are utilized only for the purpose of ease of description or reference to a drawing and are not otherwise limiting.

Embodiments of the present disclosure are described in detail with reference to the accompanying drawings. Specific structural or functional descriptions of embodiments are provided as examples for illustrative purposes to describe concepts that are disclosed in the present application. Examples or embodiments in accordance with the concepts may be carried out in various forms, and the scope of the present disclosure is not limited to the examples or embodiments described in this specification.

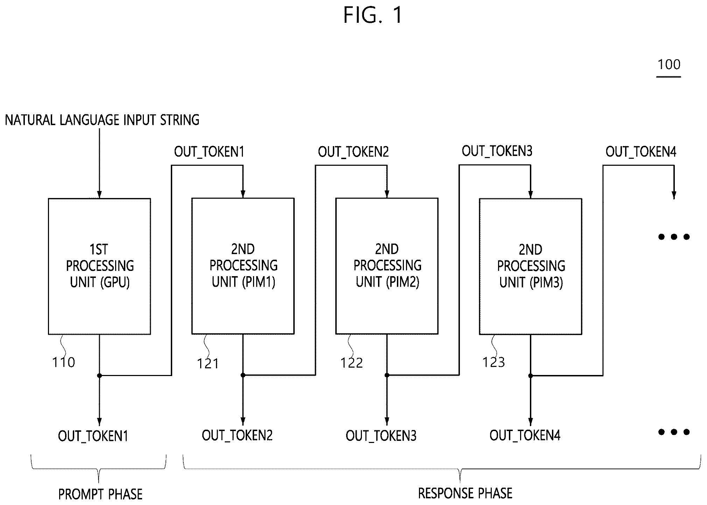

FIG. 1 is a block diagram illustrating a disaggregated inference system.

Referring to FIG. 1, a disaggregated inference system 100 includes a first processing unit 110 configured to receive a natural-language input string provided by a user and to perform a prompt phase and includes a plurality of second processing units 121, 122, 123, ... configured to perform a response phase. As used herein, a prompt phase refers to a stage of a language-model inference process in which a large language model input string is converted into a token sequence, the token sequence is embedded, key matrices and value matrices are generated and stored as a key/value cache, and a first output token is generated. The first output token can be generated during the prompt phase. The prompt phase is characterized by a high proportion of matrix-matrix multiplication operations, such that computational workload dominates data movement, and therefore exhibits a compute-bound characteristic. The response phase refers to a phase in which subsequent output tokens are sequentially generated by using the key/value cache formed during the prompt phase and an output token generated in an immediately preceding processing unit. The response phase is characterized by a high proportion of matrix-vector multiplication operations and exhibits a memory-bound characteristic.

The first processing unit 110 is implemented as a system having a compute-bound characteristic, and the plurality of second processing units 121, 122, 123, ... are implemented as a system having a memory-bound characteristic. In an embodiment, the first processing unit 110 may be implemented as a system having relatively low memory bandwidth or relatively low memory-access performance, and the plurality of second processing units 121, 122, 123, ... may be implemented as a system having relatively high memory bandwidth or relatively high memory-access performance. In this case, efficiency in the response phase, in which data movement frequently occurs, can be maximized.

In an embodiment, the first processing unit 110 includes a GPU device having a plurality of parallel processing cores and a large-scale computation pipeline configured to process matrix-matrix multiplication (GEMM) operations at high speed. Because a GPU device exhibits maximum performance in a compute-bound environment in which computational workload dominates data movement, the GPU device is suitable for a prompt phase that processes an entire input-token sequence at once. In another embodiment, the first processing unit 110 includes one or more of a TPU specialized for operations between matrices and tensors, an NPU optimized for deep-learning inference, and an FPGA capable of implementing customized parallel computation by programming hardware circuits.

The plurality of second processing units 121, 122, 123, ... include a PIM (Processing-In-Memory) device configured to perform matrix-vector multiplication with reduced data movement. A PIM device includes computation circuitry integrated into a memory cell or a memory module, such that computation is performed directly within the memory without transferring data to an external component. As a result, data movement can be minimized, and a bandwidth constraint of memory can be alleviated. In an embodiment, a PIM device may be implemented by combining a DRAM-based or SRAM-based memory module with a computation unit. However, the present disclosure is not limited thereto, and various memory technologies, such as non-volatile memory (NVM), MRAM, ReRAM, and PRAM, may also be used. That is, a PIM device may include a structure capable of performing computation within memory or at a location proximate to memory regardless of a type of memory technology.

Because a PIM device exhibits excellent efficiency in a memory-bound environment in which computational workload and data movement are comparable, the PIM device is suitable for a response phase in which matrix-vector multiplication is repeatedly performed by referencing a key/value cache and a most-recent output token. In another embodiment, the plurality of second processing units 121, 122, 123, ... may be replaced with various types of hardware that support near-memory computation. In FIG. 1, only a portion of the plurality of second processing units 121, 122, 123, ... are illustrated for convenience of explanation, and an ellipsis indicates that additional second processing units having the same structure may be added in an arbitrary quantity. Therefore, the following description is not limited to the number of second processing units illustrated and may include additional second processing units as needed.

The first processing unit 110 and the second processing units 121, 122, 123, ... respectively include an input terminal and an output terminal. The first processing unit 110 receives a natural-language input string provided by a user through the input terminal. The first processing unit 110 outputs a first output token OUT_TOKEN1 generated during a prompt phase through the output terminal. The output terminal of the first processing unit 110 is coupled to the input terminal of the second processing unit 121. The second processing unit 121 outputs a second output token OUT_TOKEN2 generated during a response phase through the output terminal. The output terminal of the second processing unit 121 is coupled to the input terminal of the second processing unit 122. The second processing unit 122 outputs a third output token OUT_TOKEN3 generated during the response phase through the output terminal. The output terminal of the second processing unit 122 is coupled to the input terminal of the second processing unit 123. The second processing unit 123 outputs a fourth output token OUT_TOKEN4 generated during the response phase through the output terminal. Although not shown in the drawing, the output terminal of the second processing unit 123 is coupled to the input terminal of a subsequent second processing unit that is not illustrated. Accordingly, each second processing unit is configured to receive an output token generated by an immediately preceding processing unit and to generate a subsequent output token based on the received output token and the key/value cache.

The first processing unit 110 converts a natural-language input string transmitted through the input terminal into a token sequence by tokenizing the natural-language input string. The first processing unit 110 processes the token sequence through embedding and matrix-matrix-multiplication-based operations to generate a first probability distribution corresponding to a first response result of a model. The first processing unit 110 selects an element having a highest probability from the first probability distribution and outputs the selected element as a first output token OUT_TOKEN1. The first output token OUT_TOKEN1 output from the first processing unit 110 is transmitted to the input terminal of the second processing unit 121.

Specifically, the first processing unit 110 applies an embedding matrix to the token sequence to generate token vectors. The first processing unit 110 may add positional embeddings to the token vectors to provide positional information. The first processing unit 110 performs matrix-matrix multiplication between an input matrix, which is formed by combining multiple tokens, and a query weight matrix to generate a query. Similarly, the first processing unit 110 performs matrix-matrix multiplication between the same input matrix and a key weight matrix and between the same input matrix and a value weight matrix to generate a key and a value, respectively.

In general, a query, a key, and a value are generated in vector form for each token input. However, because a prompt phase processes an entire token sequence at once, a plurality of queries, keys, and values corresponding to the entire token sequence are simultaneously computed. Therefore, while a query, a key, and a value may be viewed as vectors on an individual-token basis, the query, the key, and the value may be represented as a query matrix, a key matrix, and a value matrix, respectively, on a sequence basis. In a subsequent multi-head attention structure, the query matrix, the key matrix, and the value matrix are divided into a plurality of head dimensions and managed in the form of multidimensional tensors having a batch size, a number of heads, a sequence length, and a head dimension. Accordingly, the query, the key, and the value described in this embodiment may be interpreted as concepts encompassing not only vectors at a token level but also matrices or tensors used during an operation process.

The first processing unit 110 rearranges the query, the key, and the value in a format of 'sequence length × number of heads × head dimension' for performing multi-head attention. The first processing unit 110 performs a multi-head-attention operation using the rearranged query, key, and value. Specifically, the first processing unit 110 performs a Q·K^{T} operation for each head and performs scaling by dividing a result of the operation by vd_head to generate attention scores. Here, Q represents the query, T represents a transpose operation, d_head represents a head dimension, and K represents the key. The first processing unit 110 performs an element-wise operation that applies a softmax function to the attention scores to generate softmax results. The first processing unit 110 performs a batched matrix-matrix multiplication that multiplies the softmax results by the value to generate head outputs. The batched matrix-matrix multiplication that generates the head outputs may be performed for each head. The first processing unit 110 combines the head outputs of the multiple heads to generate a hidden matrix.

The first processing unit 110 performs an output projection by performing matrix-matrix multiplication between a hidden matrix and an output weight matrix to generate an attention output. The first processing unit 110 may perform normalization and residual connection on the attention output. The first processing unit 110 performs a series of operations that expand and contract the attention output through a feed-forward-network process. Specifically, the first processing unit 110 first performs matrix-matrix multiplication between an input matrix and an expansion weight matrix to expand the input matrix into an intermediate matrix having a higher dimensionality. In this process, the input dimensionality may be increased to a dimensionality that is two to four times larger. A nonlinear activation function, such as GELU, ReLU, or SiLU, may be applied to the expanded intermediate matrix, or a gated-operation scheme, such as GEGLU or SwiGLU, may be performed on the expanded intermediate matrix. The first processing unit 110 performs matrix-matrix multiplication between the transformed intermediate matrix and a contraction weight matrix to reduce the transformed intermediate matrix back to an original dimensionality of a model. As a result, a hidden matrix having the same size as an input is generated and is provided to a subsequent layer of the model. An output of the feed-forward network undergoes a residual connection added to the input and normalization is applied so that the output may be produced as a probability distribution.

The first processing unit 110 generates a key matrix and a value matrix for each layer during a prompt phase, and the first processing unit 110 stores the key matrices and the value matrices as a key/value cache according to a memory layout arranged in an order of head, token, and head dimension. During the storage process, reduced-precision storage and quantization parameters may also be recorded. The key/value cache may be transmitted to the plurality of second processing units 121, 122, 123, ... on a layer basis or a tile basis to reduce latency. The key/value cache may be deployed in the plurality of second processing units 121, 122, 123, ... in a replicated manner or a partitioned manner, and a new key/value entry may be sequentially added to the key/value cache according to each output token generated during a response phase.

The second processing unit 121 receives a key/value cache formed during a prompt phase and the first output token OUT_TOKEN1 from the first processing unit 110, and the second processing unit 121 performs a first operation of a response phase. Specifically, the second processing unit 121 generates a query vector from the first output token OUT_TOKEN1. The second processing unit 121 performs matrix-vector multiplication between the query vector and a key matrix stored in the key/value cache to generate an attention-score vector. The second processing unit 121 applies a softmax function to the attention-score vector to generate a normalized attention-score vector and performs matrix-vector multiplication between the normalized attention-score vector and a value matrix to generate and output a second output token OUT_TOKEN2. The second output token OUT_TOKEN2 output from the second processing unit 121 is transmitted to an input terminal of the second processing unit 122.

The second processing unit 122 receives the key/value cache and the second output token OUT_TOKEN2 output from the second processing unit 121, and the second processing unit 122 generates a third output token OUT_TOKEN3 by performing matrix-vector-multiplication-based operations. The matrix-vector-multiplication-based operations performed in the second processing unit 122 may be performed in a manner similar to operations performed in the second processing unit 121. The third output token OUT_TOKEN3 output from the second processing unit 122 is transmitted to an input terminal of the second processing unit 123.

The second processing unit 123 receives the key/value cache and the third output token OUT_TOKEN3 output from the second processing unit 122, and the second processing unit 123 generates a fourth output token OUT_TOKEN4 by performing matrix-vector-multiplication-based operations. Similarly, the matrix-vector-multiplication-based operations performed in the second processing unit 123 may be performed in a manner similar to operations performed in the second processing unit 121. The fourth output token OUT_TOKEN4 output from the second processing unit 123 is transmitted to an input terminal of a subsequent second processing unit that is not illustrated. This process is repeated, as indicated by the ellipsis in the drawing, and continues until a final termination condition is satisfied. A series of output tokens OUT_TOKEN1, OUT_TOKEN2, OUT_TOKEN3, OUT_TOKEN4, ... generated by the first processing unit 110 and the plurality of second processing units 121, 122, 123, ... until a termination time may be provided as a final response.

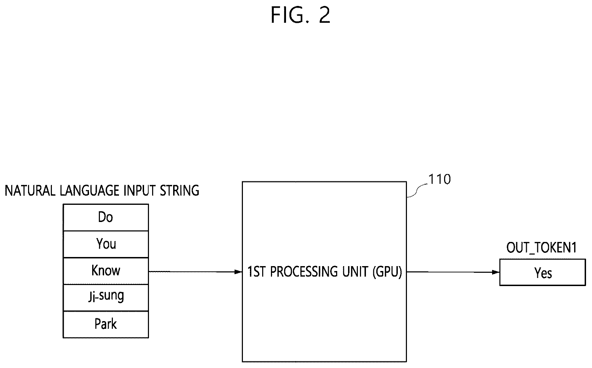

FIG. 2 illustrates operations performed by the first processing unit during the prompt phase of the language-model inference process.

Referring to FIG. 2, the first processing unit 110 may be a GPU device having a compute-bound characteristic. The first processing unit 110 receives a natural-language input string input by a user, for example, "Do you know Ji-sung Park?". The first processing unit 110 divides the natural-language input string into a plurality of tokens by using a tokenizer and converts each token into a fixed-dimensional vector by mapping the token to a predefined embedding matrix. A set of token vectors formed in this manner constitutes a token sequence.

The first processing unit 110 performs matrix-matrix-multiplication-based operations across multiple layers on the token sequence. Specifically, the first processing unit 110 sequentially inputs the token sequence into an attention block and a feed-forward block of each layer to generate query/key/value matrices, form a key/value cache, and update a hidden representation. This process is generally performed efficiently through batched matrix-matrix multiplication. A hidden matrix generated in a final layer is converted into a logit vector or a probability distribution over a vocabulary of a model through an output-projection operation.

The first processing unit 110 selects an element having a highest probability from the logit vector or the probability distribution and outputs the selected element as a first output token OUT_TOKEN1. The first output token OUT_TOKEN1 is expressed as an index value within a vocabulary or as a vector corresponding to the index value, and, depending on an embodiment, the token may be converted into a human-readable character or word for display. In the drawing, a character "Yes" corresponding to the first output token OUT_TOKEN1 is illustrated for convenience of explanation; however, this is merely an exemplary representation. The first output token OUT_TOKEN1 generated by the first processing unit 110 is provided as an input to subsequent second processing units so that additional output tokens are sequentially generated.

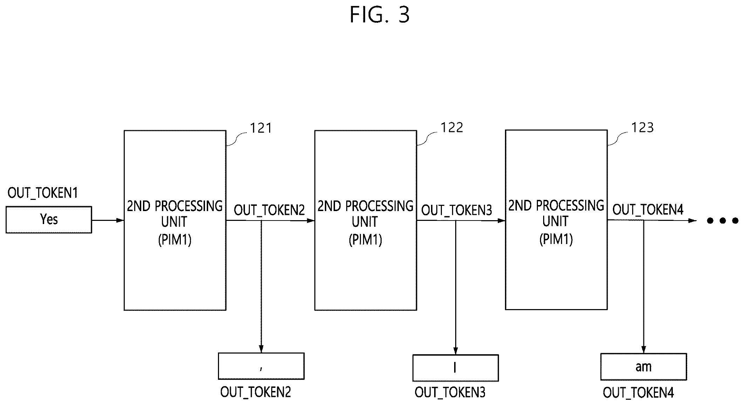

FIG. 3 illustrates operations performed by each of the plurality of second processing units during the response phase, in which output tokens are sequentially generated by matrix-vector multiplication using a key/value cache.

Referring to FIG. 3, the second processing unit 121 receives, as an input of a response phase, the first output token OUT_TOKEN1, "Yes," generated by the first processing unit 110 during a prompt phase as illustrated in FIG. 2. The second processing unit 121 performs matrix-vector-multiplication-based operations using the first output token OUT_TOKEN1. During this operation, the second processing unit 121 combines the key/value cache formed during the prompt phase with the input-token vector corresponding to the first output token OUT_TOKEN1 to generate a probability distribution over a vocabulary of a model. The second processing unit 121 selects an element having a highest probability from the probability distribution and outputs the selected element as a second output token OUT_TOKEN2. In the drawing, a comma "," is illustratively shown as the second output token OUT_TOKEN2.

The second processing unit 122 receives, as an input, an output token generated in an immediately preceding processing unit, namely the second output token OUT_TOKEN2, performs matrix-vector-multiplication-based operations in the same manner as the second processing unit 121, and converts a result of the operations into a probability distribution. The second processing unit 122 outputs, as a third output token OUT_TOKEN3, an element selected based on the probability distribution. In the drawing, the character "I" is illustratively shown as the third output token OUT_TOKEN3. In the same manner as the previous second processing units, the second processing unit 123 receives the third output token OUT_TOKEN3 as an input, performs operations, and outputs a fourth output token OUT_TOKEN4 as a result. In the drawing, the character "am" is illustratively shown as the fourth output token OUT_TOKEN4.

As described above, the second processing units 121, 122, 123, ... sequentially receive, as an input, an output token generated in an immediately preceding processing unit, perform matrix-vector-multiplication-based operations, and generate a new output token as a result. This process may be repeatedly performed until an entire sentence is completed. Accordingly, during a response phase, the second processing units 121, 122, 123, ... perform a role of sequentially extending output tokens while referencing a key/value cache formed during a prompt phase, and the second processing units 121, 122, 123, ... may be implemented in a manner suitable for memory-bound operations of a PIM-based architecture.

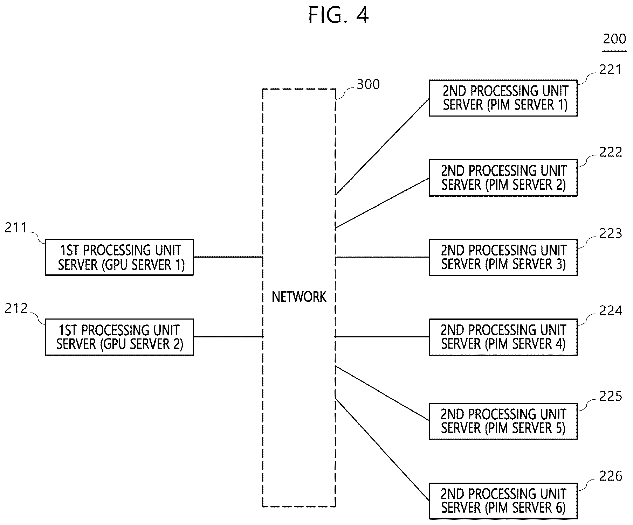

FIG. 4 is a block diagram illustrating a server-based embodiment of the disaggregated inference system of FIG. 1.

Referring to FIG. 4, a disaggregated inference system 200 includes a plurality of first processing-unit servers 211 and 212 and a plurality of second processing-unit servers 221-226. In an embodiment, the disaggregated inference system 200 includes a plurality of first processing-unit servers and a plurality of second processing-unit servers, for example, two first processing-unit servers and six second processing-unit servers. However, this is merely an example, and the number of first processing-unit servers and the number of second processing-unit servers may be variously configured. In an embodiment, the number of second processing-unit servers may be greater than the number of first processing-unit servers. Because the disaggregated inference system 200 is implemented on a server basis, computational characteristics of the first processing unit and the second processing unit can be separated, enabling distributed processing of large-scale LLM inference.

The plurality of first processing-unit servers 211 and 212 and the plurality of second processing-unit servers 221-226 are connected to a network 300. The network 300 may include network infrastructure, such as a router, a switch, or a fabric device, and may be implemented in a structure configured to minimize data-transfer latency and bandwidth limitations. In an embodiment, the network 300 may be configured based on high-speed interconnect technologies, such as Ethernet, InfiniBand, a PCIe-based network, NVLink, or CXL (Compute Express Link). Through such a high-speed network, the first processing-unit servers 211 and 212 can efficiently transfer a key/value cache and output tokens generated during a prompt phase to the second processing-unit servers 221-226.

In addition, the network 300 supports a packet-based data-transfer scheme, enabling a large key/value cache to be distributed to multiple second processing-unit servers and transmitted in a broadcast manner or a multicast manner. In this case, because the same key/value cache is shared across multiple second processing-unit servers and utilized in parallel during a response phase, inference throughput can be further improved. Furthermore, the network 300 supports transmission-optimization techniques, such as data compression and cache coherence, thereby minimizing a size of data transferred from the first processing-unit servers to the second processing-unit servers. Connections between the first processing-unit servers and the second processing-unit servers may be implemented in a form of a dedicated channel or a shared bus and, as needed, may be arranged in a hierarchical network topology, such as a tree structure, a mesh structure, or a fat-tree structure.

In an embodiment, the first processing-unit servers 211 and 212 may be configured as GPU servers. The first processing-unit servers 211 and 212 receive a natural-language input string provided by a user and perform a prompt phase. During the prompt phase, the first processing-unit servers 211 and 212 generate a token sequence, perform matrix-matrix-multiplication-based operations, and form a key/value cache including query, key, and value matrices. Each of the first processing-unit servers 211 and 212 may generate an output token as a result of operations performed during the prompt phase.

The key/value cache and the output token formed in the first processing-unit servers 211 and 212 are delivered to the plurality of second processing-unit servers 221-226 through the network 300. In an embodiment, the second processing-unit servers 221-226 may be PIM servers optimized for memory-bound operations. Each of the second processing-unit servers 221-226 performs matrix-vector-multiplication-based operations during a response phase by using the output token and the key/value cache delivered from the first processing-unit servers 211 and 212. Accordingly, each of the second processing-unit servers 221-226 generates a new output token, and the generated output token may be continuously utilized in operations performed by another second processing-unit server without passing back through the first processing-unit servers 211 and 212.

In the server-based embodiment, a prompt phase performed by the first processing-unit servers and a response phase performed by the second processing-unit servers are executed in parallel, such that prompt processing of a subsequent query overlaps with response processing of a preceding query.

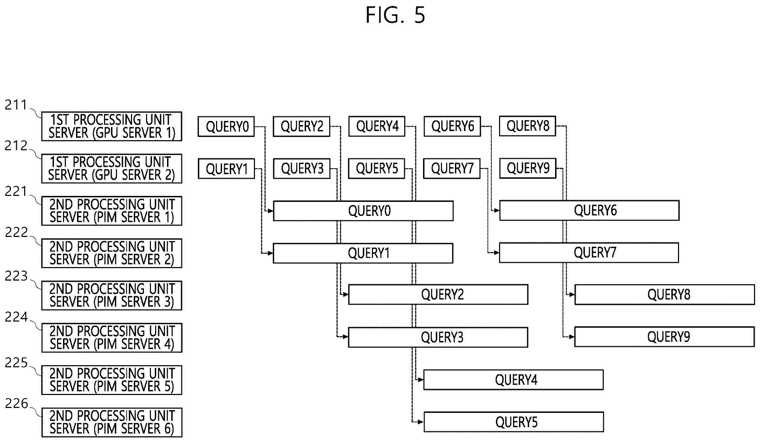

FIG. 5 is a diagram provided to explain an example of an operation of the disaggregated inference system of FIG. 4. In the following description, a temporal progression of queries processed in the disaggregated inference system will be described as an example.

Referring to FIG. 5, the disaggregated inference system 200, described with reference to FIG. 4, can process a plurality of queries, for example, first through tenth queries QUERY0-QUERY9, in a pipeline manner by separating a prompt phase and a response phase. First, the first processing-unit servers 211 and 212, sequentially or in a batch manner, perform the prompt processing of the plurality of queries and generate a key/value cache and a first output token corresponding to each query. The first processing-unit servers 211 and 212 immediately transfer and assign the generated key/value cache and the first output token to an available second processing-unit server through the network 300. Each of the second processing-unit servers 221-226 generates output tokens following the first output token based on the delivered key/calue cache and the first output token corresponding to a query assigned to the second processing-unit server, and this process is repeated until a termination condition, for example, an EOS token, is generated. While the response phase is performed in the second processing-unit servers 221-226, the first processing-unit servers 211 and 212 continue to perform the prompt phase of a subsequent query, so the prompt phase and the response phase can be executed in parallel.

According to the example illustrated in FIG. 5, the first processing-unit server 211 sequentially processes the prompts of a first query QUERY0, a third query QUERY2, a fifth query QUERY4, a seventh query QUERY6, and a ninth query QUERY8. Similarly, the first processing-unit server 212 sequentially processes the prompts of a second query QUERY1, a fourth query QUERY3, a sixth query QUERY5, an eighth query QUERY7, and a tenth query QUERY9. The prompt processing of the queries performed in the first processing-unit server 211 and the prompt processing of the queries performed in the first processing-unit server 212 are executed in parallel.

When the prompt of the first query QUERY0 in the first processing-unit server 211 and the prompt of the second query QUERY1 in the first processing-unit server 212 are completed, the first processing-unit server 211 transfers the key/value cache and the first output token of the first query QUERY0 to an available second processing-unit server, for example, the second processing-unit server 221, through the network 300. Likewise, the first processing-unit server 212 transfers the key/value cache and the first output token of the second query QUERY1 to an available second processing-unit server, for example, the second processing-unit server 222, through the network 300.

When the prompt of the third query QUERY2 in the first processing-unit server 211 and the prompt of the fourth query QUERY3 in the first processing-unit server 212 are completed, the first processing-unit server 211 transfers the key/value cache and the first output token of the third query QUERY2 to an available second processing-unit server, for example, the second processing-unit server 223, through the network 300. Likewise, the first processing-unit server 212 transfers the key/value cache and the first output token of the fourth query QUERY3 to an available second processing-unit server, for example, the fourth second processing-unit server 224, through the network 300.

When the prompt of the fifth query QUERY4 in the first processing-unit server 211 and the prompt of the sixth query QUERY5 in the first processing-unit server 212 are completed, the first processing-unit server 211 transfers the key/value cache and the first output token of the fifth query QUERY4 to an available second processing-unit server, for example, the fifth second processing-unit server 225, through the network 300. Likewise, the first processing-unit server 212 transfers the key/value cache and the first output token of the sixth query QUERY5 to an available second processing-unit server, for example, the sixth second processing-unit server 226, through the network 300.

When the prompt of the seventh query QUERY6 in the first processing-unit server 211 and the prompt of the eighth query QUERY7 in the first processing-unit server 212 are completed, the first processing-unit server 211 transfers the key/value cache and the first output token of the seventh query QUERY6 to an available second processing-unit server, for example, the second processing-unit server 221, through the network 300. Likewise, the first processing-unit server 212 transfers the key/value cache and the first output token of the eighth query QUERY7 to an available second processing-unit server, for example, the second processing-unit server 222, through the network 300.

When the prompt of the ninth query QUERY8 in the first processing-unit server 211 and the prompt of the tenth query QUERY9 in the first processing-unit server 212 are completed, the first processing-unit server 211 transfers the key/value cache and the first output token of the ninth query QUERY8 to an available second processing-unit server, for example, the second processing-unit server 223, through the network 300. Likewise, the first processing-unit server 212 transfers the key/value cache and the first output token of the tenth query QUERY9 to an available second processing-unit server, for example, the fourth second processing-unit server 224, through the network 300.

The second processing-unit server 221, after performing a response phase for the first query QUERY0 and becoming available, subsequently performs the response phase for the seventh query QUERY6. The second processing-unit server 222, after performing a response phase for the second query QUERY1 and becoming available, subsequently performs the response phase for the eighth query QUERY7. The second processing-unit server 223, after performing a response phase for the third query QUERY2 and becoming available, subsequently performs the response phase for the ninth query QUERY8. The fourth second processing-unit server 224, after performing a response phase for the fourth query QUERY3 and becoming available, subsequently performs the response phase for the tenth query QUERY9. The fifth second processing-unit server 225, after performing a response phase for the fifth query QUERY4, remains in an available state. The sixth second processing-unit server 226, after performing a response phase for the sixth query QUERY5, also remains in an available state.

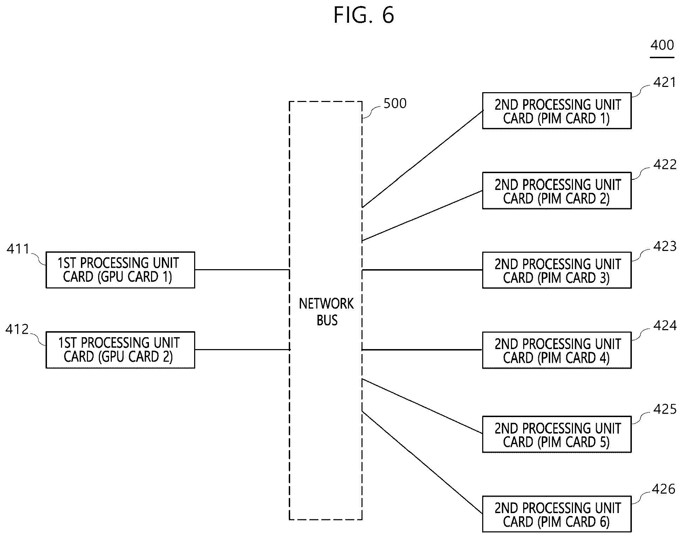

FIG. 6 is a block diagram illustrating a card-based embodiment of the disaggregated inference system of FIG. 1.

Referring to FIG. 6, a disaggregated inference system 400 includes a plurality of first processing-unit cards 411 and 412 and a plurality of second processing-unit cards 421-426. In the present example, the disaggregated inference system 400 includes two first processing-unit cards 411 and 412 and six second processing-unit cards 421-426. However, this is merely an example, and the number of first processing-unit cards and the number of second processing-unit cards may be variously configured. In an embodiment, the number of second processing-unit cards may be greater than the number of first processing-unit cards. Because the disaggregated inference system 400 is implemented on a card basis, the system provides advantages in modularity and density, and, when needed, the system can be easily expanded by simply adding or replacing a first processing-unit card or a second processing-unit card.

The first processing-unit cards 411 and 412 and the second processing-unit cards 421-426 are interconnected through a network bus 500. In this embodiment, the network bus 500 may be implemented based on PCIe, NVLink, CXL, or another high-speed interconnect. A key/value cache and an output token generated in the first processing-unit cards 411 and 412 are transmitted to the second processing-unit cards 421-426 through the network bus 500. The transmission may be performed in a unicast, multicast, or broadcast manner, and metadata, such as a token identifier, layer information, and dimensional information, may be included during the data-transfer process.

In an embodiment, the first processing-unit cards 411 and 412 may be configured as GPU cards. The first processing-unit cards 411 and 412 receive a natural-language input string provided by a user and perform a prompt phase. During the prompt phase, the first processing-unit cards 411 and 412 generate a token sequence, perform matrix-matrix-multiplication-based operations, and form a key/value cache including query, key, and value matrices. Each of the first processing-unit cards 411 and 412 may generate an output token as a result of operations performed during the prompt phase.

The key/value cache and the output token formed in the first processing-unit cards 411 and 412 are delivered to the second processing-unit cards 421-426 through the network bus 500. In an embodiment, the second processing-unit cards 421-426 may be PIM cards optimized for memory-bound operations. Each of the second processing-unit cards 421-426 performs matrix-vector-multiplication-based operations during a response phase by using the output token and the key/value cache delivered from the first processing-unit cards 411 and 412. Accordingly, each of the second processing-unit cards 421-426 generates a new output token, and the generated output token may be continuously utilized in operations performed by another second processing-unit card without passing back through the first processing-unit cards 411 and 412.

The card-based embodiment provides functional effects equivalent to those of the server-based embodiment, in that a prompt phase and a response phase are executed by different types of processing units optimized for respective computational characteristics.

A limited number of possible embodiments for the present teachings have been presented above for illustrative purposes. Those of ordinary skill in the art will appreciate that various modifications, additions, and substitutions are possible. While this patent document contains many specifics, these should not be construed as limitations on the scope of the present teachings or of what may be claimed, but rather as descriptions of features that may be specific to particular embodiments. Certain features that are described in this patent document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

## Claims

1. A disaggregated inference system comprising:
at least one first processing unit having a compute-bound characteristic; and
a plurality of second processing units having a memory-bound characteristic,
wherein a first second processing unit, among the plurality of second processing units, is coupled to the first processing unit,
wherein the first processing unit is configured to perform a prompt phase of a language-model inference process, and
wherein the plurality of second processing units are configured to perform a response phase of the language-model inference process.

2. The disaggregated inference system of claim 1,
wherein the first processing unit is configured as a device in which computational workload dominates data movement, and
wherein the plurality of second processing units are configured as devices in which computational workload and data movement are comparable.

3. The disaggregated inference system of claim 1,
wherein the first processing unit comprises one or more of a Graphics Processing Unit, a Tensor Processing Unit, a Neural Processing Unit, and a Field-Programmable Gate Array.

4. The disaggregated inference system of claim 1,
wherein the plurality of second processing units comprises Processing-in-Memory devices.

5. The disaggregated inference system of claim 1,
wherein the first processing unit is configured to perform the prompt phase by converting an input natural-language input string into a token sequence, performing embedding operations on the token sequence, and performing matrix-matrix multiplication on the token sequence to generate a first output token.

6. The disaggregated inference system of claim 5,
wherein the first processing unit is configured to perform the matrix-matrix multiplication to generate a query matrix, a key matrix, and a value matrix, and to store the key matrix and the value matrix in a key/value cache.

7. The disaggregated inference system of claim 6,
wherein the plurality of second processing units are configured to perform a response phase by sequentially generating subsequent output tokens by each of the plurality of second processing units performing matrix-vector multiplication on an output token received from an immediately preceding processing unit and the key/value cache.

8. The disaggregated inference system of claim 5,
wherein the first second processing unit, among the plurality of second processing units, is coupled to the first processing unit to receive the first output token.

9. The disaggregated inference system of claim 8,
wherein the first second processing unit is configured to generate and output a second output token by performing matrix-vector multiplication on the first output token and the key/value cache.

10. The disaggregated inference system of claim 9,
wherein a k-th second processing unit, among the plurality of second processing units, excluding the first second processing unit, is configured to receive a k-th output token output from a (k-1)-th second processing unit and to generate and output a (k+1)-th output token,
wherein k is a natural number equal to or greater than 2.

11. The disaggregated inference system of claim 1,
wherein a prompt phase performed by the first processing unit and a response phase performed by the plurality of second processing units are performed in parallel.

12. The disaggregated inference system of claim 1,
wherein the response phase performed by the plurality of second processing units is performed in parallel.

13. A disaggregated inference system comprising:
a first processing unit configured to receive a natural-language input string, convert the natural-language input string into a token sequence, embed the token sequence, and perform matrix-matrix multiplication to generate a first output token; and
a plurality of second processing units configured to sequentially generate subsequent output tokens by each of the plurality of second processing units performing matrix-vector multiplication on an output token received from an immediately preceding processing unit and a key/value cache.

14. The disaggregated inference system of claim 13,
wherein the first processing unit has a compute-bound characteristic, and
wherein the plurality of second processing units have a memory-bound characteristic.

15. The disaggregated inference system of claim 13,
wherein the first processing unit comprises one or more of a Graphics Processing Unit, a Tensor Processing Unit, a Neural Processing Unit, and a Field-Programmable Gate Array.

16. The disaggregated inference system of claim 13,
wherein the plurality of second processing units comprises Processing-in-Memory devices.

17. The disaggregated inference system of claim 13,
wherein a first second processing unit, among the plurality of second processing units, is coupled to the first processing unit and is configured to:
receive the first output token output from the first processing unit; and
generate and output a second output token.

18. The disaggregated inference system of claim 17,
wherein a k-th second processing unit, among the plurality of second processing units, excluding the first second processing unit, is configured to receive a k-th output token output from a (k-1)-th second processing unit and to generate and output a (k+1)-th output token,
wherein k is a natural number equal to or greater than 2.

19. The disaggregated inference system of claim 13,
wherein an operation that generates the first output token by the first processing unit and an operation that sequentially generates the subsequent output tokens by the plurality of second processing units are performed in parallel.

20. A disaggregated inference system comprising:
a plurality of first processing-unit servers having a compute-bound characteristic; and
a plurality of second processing-unit servers having a memory-bound characteristic,
wherein the plurality of first processing-unit servers are connected to the plurality of second processing-unit servers through a network,
wherein the plurality of first processing-unit servers are configured to perform a prompt phase of a language-model inference process, and
wherein the plurality of second processing-unit servers are configured to perform a response phase of the language-model inference process.

21. A disaggregated inference system comprising:
a plurality of first processing-unit cards having a compute-bound characteristic; and
a plurality of second processing-unit cards having a memory-bound characteristic,
wherein the plurality of first processing-unit cards are connected to the plurality of second processing-unit cards through a network bus,
wherein the plurality of first processing-unit cards are configured to perform a prompt phase of a language-model inference process, and
wherein the plurality of second processing-unit cards are configured to perform a response phase of the language-model inference process.
